Europäisches Patentamt

European Patent Office

Office européen des brevets

(19)

(11) Veröffentlichungsnummer: **0 001 421**
**B1**

(12) **EUROPÄISCHE PATENTSCHRIFT**

(45) Veröffentlichungstag der Patentschrift: **30.06.82**

(21) Anmeldenummer: **78100957.6**

(22) Anmeldetag: **22.09.78**

(51) Int. Cl.³: **C 08 K 5/37, C 08 L 27/06**

(54) Verwendung von Mercaptanen zur Wärmestabilisierung chlorhaltiger Thermoplaste.

(30) Priorität: **30.09.77 CH 11983/77**

(43) Veröffentlichungstag der Anmeldung:
**18.04.79 Patentblatt 79/8**

(45) Bekanntmachung des Hinweises auf die Patenterteilung:
**30.06.82 Patentblatt 82/26**

(84) Benannte Vertragsstaaten:
**BE CH DE FR GB NL SE**

(56) Entgegenhaltungen:
**DE - A - 1 122 507**
**DE - A - 1 494 941**
**DE - A - 2 648 701**

(73) Patentinhaber: **CIBA-GEIGY AG**
**Patentabteilung Postfach**
**CH-4002 Basel (CH)**

(72) Erfinder: **Schneider, Rainer, Dr.**
**Grafenstrasse 8**
**D-6140 Bensheim-Auerbach (DE)**
Erfinder: **Abeler, Gerd, Dr.**
**Wilhelm-Leuschner Strasse 235**
**D-6103 Griesheim über Darmstadt (DE)**

# 0 001 421

Verwendung von Mercaptanen zur Wärmestabilisierung chlorhaltiger Thermoplaste

Die vorliegende Erfindung betrifft die Verwendung von einem Mercaptomethylaromaten und einem Epoxidweichmacher als Wärmestabilisatoren von chlorahltigen Thermoplasten.

Polyvinylchlorid neigt unter dem Einfluss von Wärme zum Abbau, so dass die Zugabe von geeigneten Stabilisatoren notwendig ist, um eine Verarbeitung in der Wärme ohne bzw. mit nur unbedeutenden Veränderungen der physikalisch-mechanischen Eigenschaften und Verfärbungen des Materials zu ermöglichen.

Neben überwiegend metallhaltigen Stabilisatoren sind auch einige metallfreie Stabilisatoren bekannt geworden, die jedoch den vielfältigen technischen Anforderungen nicht immer genügen können. Zu den wertvollsten metallfreien Stabilisatoren zählen die S-haltigen $\beta$-Aminocrotonsäure-ester, die in der DT—PS 1 544 768 beschrieben sind. Sie sind gut wirksam, aber in einigen Fällen wird die relativ geringe thermische Stabilität als Nachteil empfunden, da hierbei durch Spaltprodukte Geruchsbelästigungen auftreten können.

Es wurden auch schon mercaptogruppenhaltige Stabilisatoren vorgeschlagen, z.B. Ester aus Polyolen wie Pentaerythrit und Mercaptocarbonsäuren wie Thioessigsäure, die auch zusammen mit epoxidiertem Sojabohnenöl verwendet werden können. Diesen in der US—PS 3 144 422 beschriebenen Stabilisatoren haftet jedoch ein unangenehmer Geruch an und ihre Wirksamkeit ist oft nicht ausreichend, was deren Verwendung in der Praxis einschränkt.

Aromatische Mercaptane wie Di(mercaptomethyl)benzol werden schon in dem US-Patent 2 598 407 als Vernetzungsmittel für chlorhaltige Thermoplaste vorgeschlagen, ohne dass hierbei jedoch das Problem der Thermostabilisierung mit diesen Mitteln angesprochen wird. Die deutsche Offenlegungsschrift (DT—OS) 2 648 701 offenbart mit bekannten Mitteln stabilisierte chlorhaltige Thermoplaste, die bestimmte aromatische Verbindungen zur Verbesserung der flammhemmenden Wirkung enthalten. Mercaptomethylsubstituierte Biphenylverbindungen und ähnliche werden hierzu allgemein vorgeschlagen, ohne dass das Problem der Wärmestabilisierung dabei angesprochen wird.

Aufgabe vorliegender Erfindung ist est, einen mit metallfreien Verbindungen wärmestabilisierten chlorhaltigen Thermoplasten aufzuzeigen, der die zuvor erwähnten Nachteile nicht aufweist.

Gegenstand vorliegender Erfindung ist die Verwendung von Mercaptanen in Kombination mit einem Epoxydgruppen enthaltenden Weichmacher zur Wärmestabilisierung von chlorhaltigen Thermoplasten, die dadurch gekennzeichnet, dass man ein Mercaptan aus der Reihe o-, m- oder p-Di(mercaptomethyl)benzol, 1,3,5-Trimethyltri(mercaptomethyl)benzol, 2,3,5,6-Tetramethyl-di(mercaptomethyl)benzol, Di(mercaptomethyl)naphthalin oder 4,4'-Di(mercaptomethyl)diphenyl verwendet.

Die erfindungsgemäss zu verwendenden Mercaptane sind bekannt oder können nach bekannten Verfahren hergestellt werden, z.B. durch die Umsetzung von entsprechenden Chlormethylverbindungen mit Thioharnstoff zu den Thiuroniumsalzen, deren Hydrolyse mit z.B. $NaOH/H_2O$ die gewünschten Mercaptane liefert.

Die Mercaptane werden den zu stabilisierenden chlorhaltigen Thermoplasten vor der Verarbeitung in üblichen Einrichtungen im allgemeinen in Mengen von 0,01 bis 5, vorzugsweise 0,1 bis 3 Gew.-% einverleibt, bezogen auf den chlorhaltigen Thermoplasten. Sie wirken bereits selbst stabilisierend; die Wirkung reicht jedoch für die Praxis nicht aus. Zusammen mit epoxidgruppenhaltigen Weichmachern wird aber überraschend eine synergistische Wirkung gefunden, die den Einsatz in der Praxis ermöglicht.

Die Weichmacher können in Mengen verwendet werden, wie sie zur Einstellung gewünschter Eigenschaften in weichgemachten chlorhaltigen Thermoplasten notwendig sind. Bei der Verwendung nur als Kostabilisator werden sie im allgemeinen in Mengen von mindestens 0,01 Gew.-%, vorzugsweise 0,01 bis 10, insbesondere 0,1 bis 5 Gew.-% eingesetzt, bezogen auf den chlorhaltigen Thermoplasten. Es hat sich als vorteilhaft erwiesen, das Merkaptan und den Epoxidgruppen enthaltenden Weichmacher im Verhältnis von etwa 1:0,5 bis 1:5, vorzugsweise 1:1 bis 1:4 einzusetzen.

Von den epoxidgruppenhaltigen Weichmachern werden die Ester olefinisch ungesättigter Säuren mit ein- oder mehr-funktionellen Alkoholen bevorzugt, deren Doppelbindungen epoxidiert wurden. Die Säuren enthalten bevorzugt 12 bis 22 C-Atomen und die Alkohole 1 bis 30, besonders 1 bis 20 C-Atome. Bevorzugte Säuren sind besonders Oelsäure sowie Elaidinsäure oder Linolsäure. Beispiele sind epoxidiertes Butyl- oder Octyloleat, besonders aber epoxidiertes Sojabohnenöl. Solche Epoxidverbindungen sind als technische PVC-Weichmacher im Handel und dem Kunststoff-Fachmann bekannt.

Als chlorhaltige Thermoplaste kommen vor allem Homo- oder Kopolymere des Vinylchlorides in Frage. Bevorzugt sind Suspensions- und Massepolymere und ausgewaschene, also emulgatorarme Emulsionspolymere. Als Komonomere für die Kopolymerisate kommen z.B. in Frage:

Vinylidenchlorid, Transdichloräthen, Aethylen, Propylen, Butylen, Maleinsäure, Acrylsäure, Fumarsäure, Itaconsäure. Weitere geeignete Polymere sind nachchlorierte Polyolefine. Besonders bevorzugt ist die Anwendung der Erfindung auf Weich- oder Hart-PVC.

Die Herstellung der stabilisierten Thermoplaste erfolgt nach bekannten Verfahren durch Einarbeiten der Stabilisatoren und gegebenenfalls weitere Stabilisatoren in das Polymerisat. Eine homogene Mischung von Stabilisator und PVC kann z.B. mit Hilfe eines Zweiwalzenmischers bei

# 0001421

150—210°C erzielt werden. Je nach dem Verwendungszweck der Formmasse können vor oder mit der Einarbeitung des Stabilisators auch weitere Zusätze eingearbeitet werden, wie Gleitmittel, bevorzugt Montanwachse oder Glycerin-ester, Weichmacher, Füllstoffe, Modifikatoren, wie etwa Schlagzäh-Zusätze, Pigmente, Lichtstabilisatoren, UV-Absorber, Antioxidantien oder weitere Kostabilisatoren wie z.B. Phosphite. Die chlorhaltigen Thermoplaste können nach den dafür gebräuchlichen Formgebungsverfahren, z.B. durch Extrusion, Spritzgiessen oder Kalandrieren zu Formteilen verarbeitet werden.

Die Thermostabilisierung mit den metallfreien Stabilisatoren ist in den chlorhaltigen Thermoplasten hervorragend und zumindest vergleichbar oder besser als die der bekannten guten S-haltigen Aminocrotonate. Auch die Lichtstabilität is hervorragend. Die erfindungsgemäss verwendeten Mercaptane sind praktisch geruchsfrei, thermisch stabil und wenig flüchtig, so dass nachteilige Nebeneffekte während der Verarbeitung nicht beobachtet werden.

Als besonders überraschend wird es angesehen, dass das Zusammenwirken der Bestandteile eine hervorragende synergistische Thermostabilisierung erbringt, obwohl die Eigenwirkung der verwendeten Merkaptane nur wenig ausgeprägt ist.

Die nachfolgenden Beispiele dienen der näheren Erläuterung der Erfindung. Teile sind hierin Gewichtsteile und Prozente Gewichts-Prozente.

## Beispiel 1

*Prüfung auf Thermostabilität*

Ein Dryblend, bestehend aus 100 Teilen S-PVC (K-Wert 64), 20 Teilen Dioctylphthalat, 4 Teilen epoxidiertes Sojabohnenöl (Reoplast 39), 0,5 Teilen Phosphitstabilisator (Irgastab CH 300) und 1,5 Teilen Mercaptan wird auf einem Mischwalzwerk 5 Minuten bei 170°C gewalzt und danach Testfolienstücke von 0,3 mm Dicke entnommen.

Die Folienproben werden in einem Ofen bei 180°C thermisch belastet und alle 15 Minuten an einer Probe der Yellowness-Index (YI) nach ASTM D 1925-70 bestimmt. Hierbei wird der Grad der Gelbverfärbung remissionsspetroskopisch gemessen. Ein hoher YI gibt eine starke Gelbverfärbung wieder.

Die Ergebnisse sind in Tabelle 1 zusammengefasst.

Als Vergleich wurden dieselben Folien ohne Zusatz des epoxidierten Sojabohnenöles gemacht und 2 Teile Mercaptan verwendet. Auch hier wurde der YI nach Alterung bei 180°C bestimmt, die Werte sind in Tabelle 2 zusammengestellt.

Man ersieht aus Tabelle 2, dass trotz der erhöhten Mercaptanmenge nur eine mässige Stabilisatorwirkung erreicht wird, wenn keine Epoxidverbindung anwesend ist.

Die Differenz zwischen Tabelle 1 und 2 drückt den Synergismus der beiden erfindungsgemässen Stabilisatorzusätze aus. Beim vergleichsweise mitverwendetem Aminocrotonat tritt kein Synergismus auf.

TABELLE 1

| Merkaptan | Yellowness-Index nach einer thermischen Alterung von | | | | | | |
|---|---|---|---|---|---|---|---|
| | 0 | 15 Min | 30 Min | 45 Min | 60 Min | 75 Min | 90 Min |
| — (Grundrezeptur) | 16 | 57 | >100 | | | | |
| Thioathyleneglykol-$\beta$-amino-crotonsaurebisester | 6 | 21 | 44 | 80 | >100 | | |
| o-Di(mercaptomethyl)-benzol | 4 | 30 | 85 | >100 | | | |
| m-Di(mercaptomethyl)-benzol | 2 | 21 | 70 | >100 | | | |
| p-Di(mercaptomethyl)-benzol | 2 | 26 | 75 | >100 | | | |
| 4,4-Di-(mercaptomethyl)-diphenyl | 4 | 14 | 29 | 55 | 77 | 86 | >100 |
| 2,3,5,6-Tetramethyl-di-(mercaptomethyl)benzol | 3 | 23 | 58 | 86 | >100 | | |
| 1,3,5-Trimethyl-tri-(mercaptomethyl)benzol | 3 | 18 | 45 | 65 | 75 | >100 | |
| Di(mercaptomethyl)naphthalin | 10 | 21 | 48 | 66 | 81 | >100 | |

# 0 001 421

TABELLE 2

| Merkaptan | Yellowness-Index nach Alterung | | |
|---|---|---|---|
| | 0 | 15 Min | 30 Min |
| — (Grundrezeptur) | 21 | >100 | |
| Thioathylenglykol-$\beta$-amino-crotonsaurebiester | 6 | 27 | 63 |
| o-Di(mercaptomethyl)-benzol | 5 | 63 | 100 |
| m-Di(mercaptomethyl)-benzol | 4 | 67 | >100 |
| 4,4'-Di(mercaptomethyl)-benzol | 4 | 66 | >100 |
| 2,3,5,6-Tetramethyl-di-(mercaptomethyl)benzol | 7 | 81 | >100 |
| 1,3,5-Trimethyl-tri-(mercaptomethyl)benzol | 6 | 52 | 96 |
| Di(mercaptomethyl)-naphthalin | 5 | 41 | 91 |

## Patentansprüche

1. Verwendung von Mercaptanen in Kombination mit einem Epoxydgruppen enthaltenden Weichmacher zur Wärmestabilisierung von chlorhaltigen Thermoplasten, dadurch gekennzeichnet, dass man ein Mercaptan aus der Reihe o-, m- oder p-Di(mercaptomethyl)benzol, 1,3,5-Trimethyltri(mercaptomethyl)benzol, 2,3,5,6-Tetramethyldi(mercaptomethyl)benzol, Di(mercaptomethyl)naphthalin oder 4,4'-Di(mercaptomethyl)diphenyl verwendet.

2. Verwendung gemäss Anspruch 1, dadurch gekennzeichnet, dass der chlorhaltige Thermoplast Weich- oder Hartpolyvinylchlorid ist.

## Claims

1. A method of stabilising chlorine-containing thermoplastics using a mercaptan in combination with an epoxidised plasticiser, wherein said mercaptan is selected from the group consisting of o- m- or p-di(mercaptomethyl)benzene, 1,3,5-trimethyltri(mercaptomethyl)benzene, 2,3,5,6-tetramethyldi-(mercaptomethyl)benzene, di(mercaptomethyl)naphthalene or 4,4'-di(mercaptomethyl)diphenyl. methyl)diphenyl.

2. A method according to claim 1, wherein the chlorine-containing thermoplastic is plasticised or rigid polyvinyl chloride.

## Revendications

1. Application de mercaptans associés à un plastifiant porteur de groupes époxy à la stabilisation à la chaleur de matières thermoplastiques chlorées, application caractéisée en ce qu'on utilise un mercaptan pris dans l'ensemble constitué par les o-, m- et p-bis(mercaptométhyl)-benzènes, le triméthyl-1,3,5 tris(mercaptométhyl)-benzene, le tétraméthyl-2,3,5,6 bis(mercaptométhyl)-benzène, le bis(mercaptométhyl)-naphthalène et le bis(mercaptométhyl)-4,4'-biphényle.

2. Application selon la revendication 1, caractérisée en ce que la matière thermoplastique chlorée est du polychlorure de vinyle plastifié ou dur.

5